# EUROPEAN PATENT APPLICATION

(11) **EP 3 337 130 A1**
(43) Date of publication of application: **20.06.2018**
(21) Application number: 15903963.5
(22) Date of filing: 07.12.2015
(51) Int. Cl.: H04L 29/08

(54) **TERMINAL INTERCONNECTING METHOD, DEVICE, AND STORAGE MEDIUM**

(30) Priority: 14.09.2015 CN 201510583738
(71) Applicant: Baidu Online Network Technology (Beijing) Co., Ltd., Beijing 100085 (CN)
(72) Inventor: ZHAO, Ke, Beijing 100190 (CN); ZHANG, Binglin, Beijing 100190 (CN); CHEN, Cong, Beijing 100190 (CN)
(74) Representative: Gill Jennings & Every LLP
(86) International application number: PCT/CN2015/096523
(87) International publication number: WO 2017/045276

(57) **Abstract**

Embodiments of the present disclosure disclose a method and device for interconnecting terminals, and a storage medium. The method comprises: obtaining, by a first terminal, a user triggered connection request to a second terminal; establishing, by the first terminal, a wireless fidelity connection or a universal serial bus connection with the second terminal; and communicating data, by the first terminal, with the second terminal based on the established connection to implement a data transmission between a first socket port and a second socket port, wherein, the first socket port is a communication port corresponding to a first message center on the first terminal, and the second socket port is a communication port corresponding to a second message center on the second terminal. In the technical solutions provided in the embodiments of the present disclosure, a terminal may interconnect with another terminal based on one of connection modes by using a single operating system, thereby reducing the cost and complexity of interconnection.

## Description

### CROSS-REFERENCE TO RELATED APPLICATION

This application is related to and claims the priority from Chinese Application No. 201510583738.X, filed by Baidu Online Network Technology (Beijing) Co., Ltd. as the applicant, on September 14, 2015, entitled " Method and Device for Interconnecting Terminals," the entire disclosure of which is hereby incorporated by reference.

### TECHNICAL FIELD

Embodiments of the present disclosure relate to the field of communication technology, and particularly to a method and device for interconnecting terminals, and a storage medium.

### BACKGROUND

As smart phone applications become more and more abundant and personalized, interconnection technologies between cell phones and vehicle mounted systems, as an interdisciplinary mobile interconnecting technique emerging in the last two years, gradually becomes a favourite of the automotive electronics industry. With this technique, a connection can be established between a cell phone and a vehicle mounted system, data can be transmitted to each other, and resource sharing between the vehicle mounted system and cell phone can be achieved. For example, taking full advantage of the network access function of the cell phone, the vehicle mounted system can instantly become an intelligent mobile terminal moving at a high speed. During individual journeys or long-distance travel, users may use a variety of services, such as services for enquiring stock market movement, checking business emails, searching information, and entertainment provided by the cell phone, in real time on a big screen vehicle mounted system.

However, in the conventional techniques, a vehicle mounted system having a given operating system, can only interconnect, based on one connection mode (USB connection), with cell phones having a particular operating system to implement the transmission of data streams such as videos and audios. Some developers tried to develop multiple operating systems for vehicle mounted systems, so that the vehicle mounted systems may simultaneously support USB mode interconnections with cell phones having multiple operating systems. However, this solution requires the vehicle mounted systems providing different adaptations in, thus increasing the cost and complexity of the interconnections.

### SUMMARY

Embodiments of the present disclosure provide a method and device for interconnecting terminals, and a storage medium, so that a terminal may interconnect with another terminal based on one of multiple connection modes by using a single operating system, thereby reducing the cost and complexity of interconnection.

In a first aspect, the embodiments of the present disclosure provide a t method for interconnecting terminals, comprising: obtaining, by a first terminal, a user triggered connection request to a second terminal; establishing, by the first terminal, a wireless fidelity connection or a universal serial bus connection with the second terminal; and communicating data, by the first terminal, with the second terminal based on the established connection to implement a data transmission between a first socket port and a second socket port, wherein, the first socket port is a communication port corresponding to a first message center on the first terminal, and the second socket port is a communication port corresponding to a second message center on the second terminal.

In a second aspect, the embodiments of the present disclosure further provide a device for interconnecting terminals, wherein the device is applied in a first terminal, and comprises: a connection request obtaining unit, configured to obtain a user triggered connection request to a second terminal; a connection establishing unit, configured to establish a wireless fidelity connection or a universal serial bus connection with the second terminal; and a data transmitting unit, configured to communicate data with the second terminal based on the established connection to implement a data transmission between a first socket port and a second socket port, wherein, the first socket port is a communication port corresponding to a first message center on the first terminal, and the second socket port is a communication port corresponding to a second message center on the second terminal.

In a third aspect, the embodiments of the present disclosure provide a non-transitory computer storage medium storing one or more programs, the one or more programs when executed by an apparatus for interconnecting terminals, causing the apparatus to perform operations, the operations comprising: obtaining, by a first terminal, a user triggered connection request to a second terminal; establishing, by the first terminal, a wireless fidelity connection or a universal serial bus connection with the second terminal; and communicating data, by the first terminal, with the second terminal based on the established connection to implement a data transmission between a first socket port and a second socket port, wherein, the first socket port is a communication port corresponding to a first message center on the first terminal, and the second socket port is a communication port corresponding to a second message center on the second terminal.

With the technical solutions provided by the embodiments of the present disclosure, based on the established wireless fidelity connection or universal serial bus connection, the first terminal may implement the data transmission and data sharing between the first message center on the first terminal and the second message center on the second terminal by using a single operating system, thereby reducing the cost and complexity of interconnection. Meanwhile, it is also convenient for the second terminal to freely switch between the two connection modes.

### BRIEF DESCRIPTION OF THE DRAWINGS

Fig. 1 is a schematic flowchart of a method for interconnecting terminals according to a first embodiment of the present disclosure;
Fig. 2 is a schematic diagram of an interconnection layer frame of a vehicle mounted system and a smart phone according to a second embodiment of the present disclosure;
Fig. 3 is a schematic diagram of data interaction by using the method for interconnecting the vehicle mounted system and the smart phone according to the second embodiment of the present disclosure; and
Fig. 4 is a schematic structural diagram of a device for interconnecting terminals according to a third embodiment of the present disclosure;

### DETAILED DESCRIPTION OF EMBODIMENTS

The present disclosure will be further described below in detail in combination with the accompanying drawings and the embodiments. It should be appreciated that the specific embodiments described herein are merely used for explaining the relevant invention, rather than limiting the invention. In addition, it should be noted that, for the ease of description, only the parts related to the relevant invention are shown in the accompanying drawings.

Before exemplary embodiments are discussed in more detail, it should be noted that some exemplary embodiments are described as processes or methods depicted as flowcharts. Although the flowcharts describe the operations (or steps) as sequential processes, many of the operations may be performed in parallel, concurrently or simultaneously. In addition, the order of operations may be re-arranged. The processes may be terminated when their operations are completed, but may also have additional steps not included in the figure. The processes may correspond to methods, functions, procedures, subroutines, subprograms, etc.

### First Embodiment

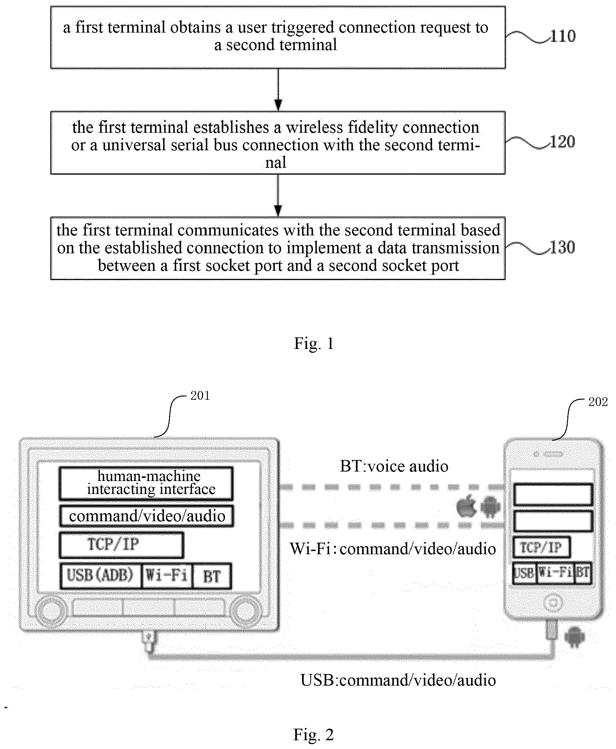

Fig. 1 is a schematic flowchart of a method for interconnecting terminals according to a first embodiment of the present disclosure. The embodiment may be suitable for the situation where the first terminal establishes a connection and transmits data with the second terminal. This method may be performed by the first terminal. The first terminal may be an electronic device which actively initiates a connection and possesses a universal serial bus connection function and/or a wireless fidelity function, and the second terminal may be an electronic device which is connected passively and possesses the universal serial bus connection function and/or the wireless fidelity function. In particular, the embodiment is especially suitable for the interconnection between a vehicle mounted system (the first terminal) and a smart phone (the second terminal). Referring to Fig. 1, the method for interconnecting terminals provided by the embodiment includes the following operations.

In operation 110, a first terminal obtains a user triggered connection request to a second terminal.

In operation 120, the first terminal establishes a wireless fidelity connection or a universal serial bus connection with the second terminal.

In this embodiment, the first terminal may start the wireless fidelity (Wi-Fi) function to establish a wireless connection with the second terminal via radio waves, and thus a physical path will be built up between the first and second terminals. Alternatively, the user of the first terminal or the user of the second terminal uses a universal serial bus to connect the first and second terminals together so as to build up a physical path therebetween.

The specific wireless fidelity connection process may including: performing a Wi-Fi hotspot scanning by the first terminal as an access point, finding an IP address broadcasted by the second terminal as a Wi-Fi hotspot with a UDP (User Datagram Protocol) protocol, and initiating by the first terminal a wireless fidelity connection request to the second terminal according to the IP address, to instruct the second terminal to establish a wireless fidelity connection with the first terminal as per the request. Of course, if the first terminal is served as the Wi-Fi hotspot, the wireless connection process may include: broadcasting by the first terminal its IP address with the UDP protocol, receiving the wireless fidelity connection request initiated by the second terminal as an access point according to the IP address, and establishing the wireless fidelity connection with the first terminal as per the request.

As a specific implementation, the operation 120 may include monitoring, by the first terminal, whether a first universal serial bus port is connected.

If the first universal serial bus port is connected, the first terminal establishes the universal serial bus connection with the second terminal.

If the first universal serial bus port is not connected, the first terminal establishes the wireless fidelity connection with the second terminal.

As another specific implementation of the embodiment, in the operation 120, the establishing, by the first terminal, a wireless fidelity connection or a universal serial bus connection with the second terminal includes the followings.

The first terminal establishes the wireless fidelity connection or universal serial bus connection with the second terminal in parallel.

And, the first terminal uses a first successfully established connection as a connection for subsequently communicating data with the second terminal.

In operation 130, the first terminal communicates data with the second terminal based on the established connection, to implement a data transmission between a first socket port and a second socket port.

The first socket port is a communication port of a first message center on the first terminal, and the second socket port is a communication port of a second message center on the second terminal. The message center is responsible for: writing to-be-sent data into a corresponding socket port, reading received data in a corresponding socket port, and decomposing and distributing the received data to other application modules.

For example, the communicating data, by the first terminal, with the second terminal based on the established wireless fidelity connection to implement a data transmission between the first socket port and the second socket port includes a data sending sub-operation and a data receiving sub-operation.

In the data sending sub-operation, the first terminal sends the to-be-sent data in the first socket port to the second socket port based on the wireless fidelity connection by using a Transmission Control Protocol/Internet Protocol (TCP/IP Protocol), according to the address of the second socket port.

In the data receiving sub-operation, the first terminal receives the data sent by the second terminal through the second socket port based on the wireless fidelity connection by using the Transmission Control Protocol/Internet Protocol according to the address of the first socket port.

The data sending sub-operation may include: performing, by the first terminal, a first encapsulation for the to-be-sent data in the first socket port by using the TCP/IP protocol to obtain a first data packet, wherein, in the encapsulation process, the address of the second socket port needs to be added, and this address may be obtained based on the IP address of the second terminal obtained in the wireless fidelity connection process and the number of the second socket port pre-stored in the local; performing a second encapsulation for the first data packet obtained by the first encapsulation based on the communication protocol used in the Wi-Fi technology to obtain a second data packet; and sending the second data packet obtained by the second encapsulation to the second terminal via the Wi-Fi connection. After receiving the second data packet, the second terminal will parse the data packet layer by layer in a reverse order of encapsulation of the first terminal, to extract and obtain the first data packet and the to-be-sent data in turn, and transmit the obtained sent data to the second socket port. Now, a data transmission between the first socket port and the second socket port is completed. The second message center on the second terminal will extract the sent data after monitoring that the second socket port receives the sent data.

It should be noted that, if the second terminal wants to send the data in the second socket port to the first socket port based on the wireless fidelity connection, the process is similar to the above data sending sub-operation, and both of them belong to the same technique concept. Accordingly, the data receiving sub-operation performed by the first terminal is also similar to the above data decomposing operation of the second terminal, and both of them belong to the same technique concept. Therefore, this will not be repeated.

Since the TCP/IP protocol and the communication protocol used by Wi-Fi are compatible with all operating systems, and the communication mode based on the Wi-Fi connection uses a C/S (Client/Server) structure, the message center of the first terminal may share data with the message center of the second terminal having any operating system by using a single operating system.

In addition, in order to ensure that the method provided by the embodiment of the present disclosure may adopt the communication mode of USB connection, the first terminal may use the data communication mode of USB connection to implement the data transmission between the first socket port and the second socket port based on the same operating system which implements the above wireless fidelity connection communication mode. This may be implemented by a process (as a first process) created by the first terminal based on its operating system.

The USB connection mode depends on the operating system. Thus, in order to implement the data communication between the two terminals based on the USB connection, the second terminal should also create a process (as a second process) for the data communication, which may cooperate with the first process and may be executed based on the USB connection. If the second terminal does not create the second process, the first terminal will not be capable of performing the data communication with the second terminal. At this moment, the method provided by the embodiment may communicate data with the second terminal based on the wireless fidelity connection to implement the data transmission between the first socket port and the second socket port. Preferably, the data is communicated by using an Android Debug Bridge (ADB) technology. The first process is an ADB process, and the second process is an ADB daemon process.

The first process and the second process adapt to each other. The communicating data, by the first terminal, with the second terminal based on the established universal serial bus connection to implement a data transmission between a first socket port and a second socket port includes:

sending, by the first terminal, to-be-sent data in the first socket port to the second socket port based on the universal serial bus connection by using the Transmission Control Protocol/Internet Protocol, and receiving, by the first terminal, data sent by the second terminal through the second socket port based on the universal serial bus connection by using the Transmission Control Protocol/Internet Protocol.

Specifically, the sending, by the first terminal, to-be-sent data in the first socket port to the second socket port based on the universal serial bus connection by using the Transmission Control Protocol/Internet Protocol may include the followings.

The first terminal performs a first encapsulation for the to-be-sent data in the first socket port by using the TCP/IP protocol to obtain a first data packet, and transmits the first data packet to the first universal serial bus port. The first universal serial bus port performs a second encapsulation for the first data packet by using the universal serial bus protocol to obtain a second data packet, and transmits the second data packet to a second universal serial bus port of the second terminal through a universal serial bus. The second terminal will parse the second data packet received by the second universal serial bus port with the universal serial bus protocol to extract the first data packet, then parse the first data packet by using the TCP/IP protocol to extract the sent data, and transmit the obtained sent data to the second socket port. Now, a data transmission between the first socket port and the second socket port is completed. The second message center on the second terminal will extract the sent data after monitoring that the second socket port receives the sent data

With the technical solution provided by the embodiment, based on the established Wi-Fi connection or the USB connection, the first terminal may implement the data transmission and data sharing between the first message center and the second message center on the second terminal by using only a single operating system, thereby reducing the cost and complexity of interconnection. Meanwhile, it is convenient for the second terminal to freely switch between the two connection modes.

### Second Embodiment

On the basis of the first embodiment, this embodiment provides an interconnecting method of connecting a smart phone (referred to as cell phone for short) which is compatible with and support both of the Android and IOS (Apple) systems, and an automobile vehicle mounted system (referred to as vehicle mounted system for short) using the USB or Wi-Fi connection. In this embodiment, there are two main connection modes for implementing the interconnection between the cell phone and the vehicle mounted system: the USB connection and the Wi-Fi connection. For the Wi-Fi connection, the communication is performed through the socket, and for the USB connection, the forwarding of the socket ports between the cell phone and the vehicle mounted system is implemented mainly through the ADB, and the communication is also based on the socket in an upper layer.

Fig. 2 is a schematic diagram showing the interconnection layer frame of a vehicle mounted system and a smart phone according to a second embodiment of the present disclosure. Referring to Fig. 2, the vehicle mounted system 201 may establish a physical path connection with the cell phone 202 through the USB or Wi-Fi. Of course, the vehicle mounted system 201 may also establish a connection with the cell phone 202 through a Bluetooth. The network layer adopts the TCP/IP protocol. The data transmitted between the socket ports based on the USB and Wi-Fi connections mainly comprises: commands, video streams (Video) and audio streams (Audio). The data transmitted based on the Bluetooth connection mainly refers to voice communication data.

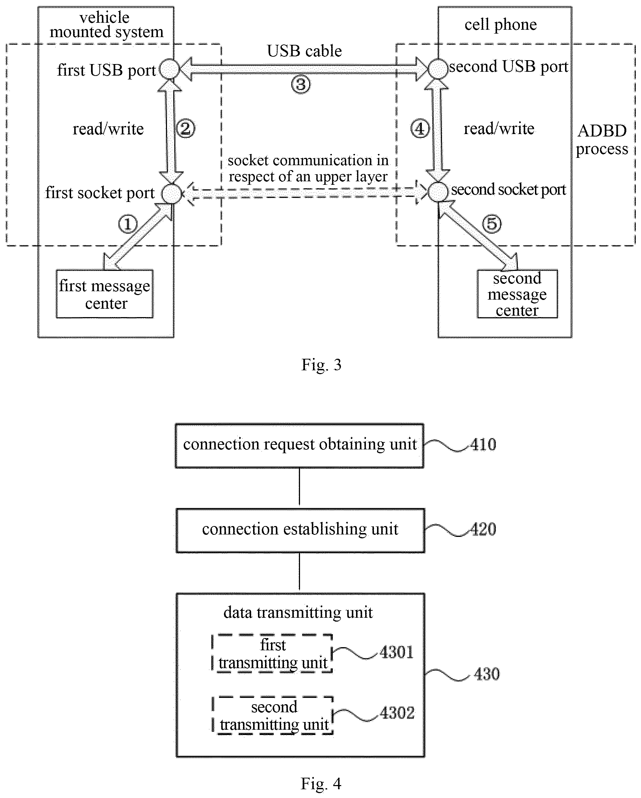

Fig. 3 is a schematic diagram showing the data interaction of the method for interconnecting the vehicle mounted system and the smart phone according to the second embodiment of the present disclosure. Referring to Fig. 3:

### 1. The vehicle mounted system interconnects with the smart phone based on the USB connection

The interconnection mode base on the USB connection may be implemented based on the ADB. This mode is suitable for the situation where an Android phone (i.e., a cell phone with an Android operating system) communicates with a vehicle mounted system. A vehicle mounted system having an Android operating system may directly use the ADB embedded within the Android operating system to communicate data with the Android phone based on the USB connection to implement the data transmission between the first socket port and the second socket port. A vehicle mounted system having a non-Android operating system needs to transplant the ADB or implement the USB-based interconnection function based on the ADB protocol, and ensure that it may interact with the ADBD process (ADB daemon) in the cell phone having the Android operating system to communicate data with the Android phone based on the USB connection, so as to implement the data transmission between the first socket port and the second socket port. The interconnecting process based on the USB connection will be described in detail.

### (1) The vehicle mounted system side

When detecting that the first USB port is in a connected state, the vehicle mounted system performs a handshake connection with the cell phone based on a USB cable connecting with the first USB port to establish a USB connection. After this connection is established successfully, the vehicle mounted system is responsible for encapsulating and forwarding the data between the first USB port and the first socket port, and sending the data of the first USB port to the cell phone based on the established USB connection and/or receiving the data sent from the cell phone to the first USB port.

For the first message center, on the one hand, it is responsible for encapsulating the message to be sent and writing the message into the corresponding first socket port in the form of a data stream; and on the other hand, it is responsible for decomposing and distributing the data stream read from the first socket port to other modules.

### (2) The cell phone side

The cell phone performs a handshake connection with the vehicle mounted system based on a USB cable connecting with the second USB port to establish the USB connection. After this connection is established successfully, the cell phone is responsible for encapsulating and forwarding the data between the second USB port and the second socket port, and sending the data of the second USB port to the vehicle mounted system based on the established USB connection and/or receiving the data sent from the vehicle mounted system to the second USB port.

For the second message center, on the one hand, it is responsible for encapsulating the message to be sent and writing the message into the corresponding second socket port in the form of a data stream; and on the other hand, it is responsible for decomposing and distributing the data stream read from the second socket port to other modules.

### (3) Data flows

As shown in Fig. 3, in the interconnection mode based on the USB connection, the data flow of sending a message from the vehicle mounted system to the cell phone is ①->②->③-> ④->⑤, and the data flow of sending a message from the cell phone to the vehicle mounted system is ⑤->④->③->②->①.

### 2. The vehicle mounted system interconnects with the smart phone based on the Wi-Fi connection

### (1) The vehicle mounted system side

The vehicle mounted system as an access point performs the Wi-Fi hotspot scanning. After finding an IP address broadcasted by a Wi-Fi hotspot, the cell phone, with the UDP protocol, the vehicle mounted system will initiate a Wi-Fi connection request to the cell phone according to the IP address, to instruct the cell phone to establish a Wi-Fi connection with the vehicle mounted system as per the request. And, the vehicle mounted system combines the IP address broadcasted by the cell phone and the pre-stored second socket port number together to obtain the address of the second socket port.

The vehicle mounted system is responsible for sending the data of the first socket port to the cell phone based on the established Wi-Fi connection, and/or receiving the data sent from the cell phone to the first socket port.

For the first message center, on the one hand, it is responsible for encapsulating the message to be sent and writing the message into the corresponding first socket port in the form of a data stream; and on the other hand, it is responsible for decomposing and distributing the data stream read from the first socket port to other modules.

### (2) The cell phone side

As a Wi-Fi hotspot, the cell phone broadcasts its IP address with the UDP protocol, then receives the Wi-Fi connection request initiated from an access point, the vehicle mounted system, to the cell phone according to the IP address, and establishes the Wi-Fi connection with the vehicle mounted system according to the request.

The cell phone is responsible for sending the data of the second socket port to the vehicle mounted system based on the established Wi-Fi connection, and/or receiving the data sent from the vehicle mounted system to the second socket port.

For the second message center, on the one hand, it is responsible for encapsulating the message to be sent and writing the message into the corresponding second socket port in the form of a data stream; and on the other hand, it is responsible for decomposing and distributing the data stream read from the second socket port to other modules.

### (3) Data flows

As shown in Fig. 3, in the interconnection mode based on the Wi-Fi connection, the data flow of sending a message from the vehicle mounted system to the cell phone is ①->⑤, and the data flow of sending a message from the cell phone to the vehicle mounted system is ⑤->①.

In the technical solution provided by the embodiment, on the one hand, the message center of the connected cell phone does not need to care about the interconnection mode, whether the USB connection or the Wi-Fi connection, and only needs to monitor the corresponding socket port. Therefore, whatever the cell phone's operating system is, its implementations are similar. Accordingly, the adaptation workload of the interconnecting application can be reduced significantly. On the other hand, if the vehicle mounted system initiating a connection adopts the USB interconnection mode, the interconnection may be implemented directly by using the ADB provided by the operating system. Or, it only needs to invoke the ADB-related commands, and other logics are similar to those of the Wi-Fi interconnection mode. Implementing the TCP/IP communication through the USB may significantly reduce the adaptation workload to different connection modes at the vehicle mounted system side.

From the above, the embodiment provides a mechanism which is compatible with both of the USB and Wi-Fi connection modes to implement the communication between the automobile vehicle mounted system and the cell phone, and supports the communication between the cell phone having either an Android or Apple operating system and the same automobile vehicle mounted system. Accordingly, the adaptation workload to the cell phone having the Android or Apple operating system is significantly reduced when the automobile vehicle mounted system connects the cell phone. It is convenient for the user to freely switch among a plurality of cell phones or between the two connection modes, and it saves the operating cost when the user changes his cell phone and improves the user experience.

### Third Embodiment

Fig. 4 is a schematic structural diagram of a terminal interconnecting device according to a third embodiment of the present disclosure. The device may be integrated on a first terminal. Referring to Fig. 4, the device includes: a connection request obtaining unit 410, configured to obtain a user triggered connection request to a second terminal; a connection establishing unit 420, configured to establish a wireless fidelity connection or a universal serial bus connection with the second terminal; and a data transmitting unit 430, configured to communicate data with the second terminal based on the established connection to implement a data transmission between a first socket port and a second socket port.

The first socket port is a communication port corresponding to a first message center on the first terminal, and the second socket port is a communication port corresponding to a second message center on the second terminal.

For example, the data transmitting unit 430 includes a first transmitting unit 4301 configured to send data in the first socket port to the second socket port based on the wireless fidelity connection by using a Transmission Control Protocol/Internet Protocol according to an address of the second socket port, and receive data sent by the second terminal through the second socket port based on the wireless fidelity connection by using the Transmission Control Protocol/Internet Protocol according to an address of the first socket port

For example, the data transmitting unit 430 includes a second transmitting unit 4302 configured to send data in the first socket port to the second socket port based on the universal serial bus connection by using the Transmission Control Protocol/Internet Protocol, and receive data sent by the second terminal through the second socket port based on the universal serial bus connection by using the Transmission Control Protocol/Internet Protocol.

For example, the data is communicated by using an Android Debug Bridge technology with the second transmitting unit.

As a specific implementation of the embodiment, the connection establishing unit 420 is further configured to: monitor whether a first universal serial bus port is connected; establish the universal serial bus connection with the second terminal if the first universal serial bus port is connected; and establish the wireless fidelity connection with the second terminal if the first universal serial bus port is not connected.

As another specific implementation of the embodiment, the connection establishing unit 420 is further configured to: establish the wireless fidelity connection and universal serial bus connection with the second terminal in parallel; and use a first successfully established connection as a connection for subsequently communicating data with the second terminal.

The above product may perform the method executed by the first terminal and provided by any embodiment of the present disclosure, and possess functional modules for performing the method and corresponding beneficial effects.

### Fourth Embodiment

The embodiment provides a non-transitory computer storage medium storing one or more modules, the one or more modules when executed by an apparatus for implementing the method of interconnecting terminals, causing the apparatus to perform operations, the operations comprising: obtaining, by a first terminal, a user triggered connection request to a second terminal; establishing, by the first terminal, a wireless fidelity connection or a universal serial bus connection with the second terminal; and communicating data, by the first terminal, with the second terminal based on the established connection to implement a data transmission between a first socket port and a second socket port.

The first socket port is a communication port corresponding to a first message center on the first terminal, and the second socket port is a communication port corresponding to a second message center on the second terminal.

When the modules stored in the storage medium are executed by the apparatus, the communicating data, by the first terminal, with the second terminal based on the established wireless fidelity connection to implement a data transmission between a first socket port and a second socket port may comprise: sending, by the first terminal, data in the first socket port to the second socket port based on the wireless fidelity connection by using a Transmission Control Protocol/Internet Protocol according to an address of the second socket port, and receiving, by the first terminal, data sent by the second terminal through the second socket port based on the wireless fidelity connection by using the Transmission Control Protocol/Internet Protocol according to an address of the first socket port.

When the modules stored in the storage medium are executed by the apparatus, the communicating data, by the first terminal, with the second terminal based on the established universal serial bus connection to implement a data transmission between a first socket port and a second socket port may comprise: sending, by the first terminal, data in the first socket port to the second socket port based on the universal serial bus connection by using the Transmission Control Protocol/Internet Protocol, and receiving, by the first terminal, data sent by the second terminal through the second socket port based on the universal serial bus connection by using the Transmission Control Protocol/Internet Protocol.

When the modules stored in the storage medium are executed by the apparatus, the data is communicated by using an Android Debug Bridge technology.

When the modules stored in the storage medium are executed by the apparatus, the establishing, by the first terminal, a wireless fidelity connection or a universal serial bus connection with the second terminal may comprise: monitoring, by the first terminal, whether a first universal serial bus port is connected; if the first universal serial bus port is connected, establishing, by the first terminal, the universal serial bus connection with the second terminal; and if the first universal serial bus port is not connected, establishing, by the first terminal, the wireless fidelity connection with the second terminal.

When the modules stored in the storage medium are executed by the apparatus, the establishing, by the first terminal, a wireless fidelity connection or a universal serial bus connection with the second terminal may further comprise: establishing, by the first terminal, the wireless fidelity connection and universal serial bus connection with the second terminal in parallel; and using, by the first terminal, a first successfully established connection as a connection for subsequently communicating data with the second terminal.

The above descriptions are merely specific implementations of the present disclosure, but the protection scope of the present disclosure is not limited thereto. Any variations or replacements that can be easily conceived of by those skilled in the art within the technical scope disclosed by the present disclosure shall be encompassed by the protection scope of the present disclosure. Therefore, the protection scope of the present disclosure shall be subject to the protection scope of the claims.

## Claims

1. A method for interconnecting terminals, comprising:
obtaining, by a first terminal, a user triggered connection request to a second terminal;
establishing, by the first terminal, a wireless fidelity connection or a universal serial bus connection with the second terminal; and
communicating data, by the first terminal, with the second terminal based on the established connection to implement a data transmission between a first socket port and a second socket port,
wherein the first socket port is a communication port corresponding to a first message center on the first terminal, and the second socket port is a communication port corresponding to a second message center on the second terminal.

2. The method according to claim 1, wherein the communicating data, by the first terminal, with the second terminal based on the established wireless fidelity connection to implement a data transmission between a first socket port and a second socket port comprises:
sending, by the first terminal, data in the first socket port to the second socket port based on the wireless fidelity connection by using a Transmission Control Protocol/Internet Protocol according to an address of the second socket port, and receiving, by the first terminal, data sent by the second terminal through the second socket port based on the wireless fidelity connection by using the Transmission Control Protocol/Internet Protocol according to an address of the first socket port.

3. The method according to claim 1, wherein the communicating data, by the first terminal, with the second terminal based on the established universal serial bus connection to implement a data transmission between a first socket port and a second socket port comprises:
sending, by the first terminal, data in the first socket port to the second socket port based on the universal serial bus connection by using the Transmission Control Protocol/Internet Protocol, and receiving, by the first terminal, data sent by the second terminal through the second socket port based on the universal serial bus connection by using the Transmission Control Protocol/Internet Protocol.

4. The method according to claim 3, wherein the data is communicated by using an Android Debug Bridge technology.

5. The method according to claim 1, wherein the establishing, by the first terminal, a wireless fidelity connection or a universal serial bus connection with the second terminal comprises:
monitoring, by the first terminal, whether a first universal serial bus port is connected;
if the first universal serial bus port is connected, establishing, by the first terminal, the universal serial bus connection with the second terminal; and
if the first universal serial bus port is not connected, establishing, by the first terminal, the wireless fidelity connection with the second terminal.

6. The method according to claim 1, wherein the establishing, by the first terminal, a wireless fidelity connection or a universal serial bus connection with the second terminal comprises:
establishing, by the first terminal, the wireless fidelity connection and universal serial bus connection with the second terminal in parallel; and
using, by the first terminal, a first successfully established connection as a connection for subsequently communicating data with the second terminal.

7. A device for interconnecting terminals, wherein the device is applied in a first terminal, and comprises:
a connection request obtaining unit, configured to obtain a user triggered connection request to a second terminal;
a connection establishing unit, configured to establish a wireless fidelity connection or a universal serial bus connection with the second terminal; and
a data transmitting unit, configured to communicate data with the second terminal based on the established connection to implement a data transmission between a first socket port and a second socket port,
wherein the first socket port is a communication port corresponding to a first message center on the first terminal, and the second socket port is a communication port corresponding to a second message center on the second terminal.

8. The device according to claim 7, wherein the data transmitting unit comprises a first transmitting unit configured to:
send data in the first socket port to the second socket port based on the wireless fidelity connection by using a Transmission Control Protocol/Internet Protocol according to an address of the second socket port, and receive data sent by the second terminal through the second socket port based on the wireless fidelity connection by using the Transmission Control Protocol/Internet Protocol according to an address of the first socket port.

9. The device according to claim 7, wherein the data transmitting unit comprises a second transmitting unit configured to:
send data in the first socket port to the second socket port based on the universal serial bus connection by using the Transmission Control Protocol/Internet Protocol, and receive data sent by the second terminal through the second socket port based on the universal serial bus connection by using the Transmission Control Protocol/Internet Protocol.

10. The device according to claim 9, wherein the data is communicated by using an Android Debug Bridge technology.

11. The device according to claim 7, wherein the connection establishing unit is further configured to:
monitor whether a first universal serial bus port is connected;
establish the universal serial bus connection with the second terminal if the first universal serial bus port is connected; and
establish the wireless fidelity connection with the second terminal if the first universal serial bus port is not connected.

12. The device according to claim 7, wherein the connection establishing unit is further configured to:
establish the wireless fidelity connection and universal serial bus connection with the second terminal in parallel; and
use a first successfully established connection as a connection for subsequently communicating data with the second terminal.

13. A non-transitory computer storage medium storing one or more programs, the one or more programs when executed by an apparatus for interconnecting terminals, causing the apparatus to perform operations, the operations comprising:
obtaining, by a first terminal, a user triggered connection request to a second terminal;
establishing, by the first terminal, a wireless fidelity connection or a universal serial bus connection with the second terminal; and
communicating data, by the first terminal, with the second terminal based on the established connection to implement a data transmission between a first socket port and a second socket port,
wherein the first socket port is a communication port corresponding to a first message center on the first terminal, and the second socket port is a communication port corresponding to a second message center on the second terminal.
